# EUROPÄISCHE PATENTSCHRIFT

(11) **EP 1 236 035 B1**
(45) Veröffentlichungstag und Bekanntmachung des Hinweises auf die Patenterteilung: **01.09.2004**
(21) Anmeldenummer: 00983204.9
(22) Anmeldetag: 01.12.2000
(51) Int. Cl.: G01N 21/91

(54) **VERFAHREN ZUR QUALITÄTSKONTROLLE VON MATERIALSCHICHTEN**
METHOD FOR QUALITY CONTROL OF MATERIAL LAYERS
PROCEDE DE CONTROLE DE LA QUALITE DE COUCHES DE MATIERE

(30) Priorität: 06.12.1999 DE 19958641
(43) Veröffentlichungstag der Anmeldung: 04.09.2002
(73) Patentinhaber: INSTITUT FÜR CHEMO- UND BIOSENSORIK Münster e.V., 48149 Münster (DE)
(72) Erfinder: BORCHARDT, Michael, 48485 Neuenkirchen (DE); WENDZINSKI, Frank, 48291 Telgte (DE); EIKERMANN, Dorthe, 48147 Münster (DE)
(74) Vertreter: Pfenning, Meinig & Partner
(86) Internationale Anmeldenummer: PCT/EP2000/012105
(87) Internationale Veröffentlichungsnummer: WO 2001/042772

(56) Entgegenhaltungen:
- EP-A- 0 838 850
- US-A- 4 302 108
- US-A- 5 416 594

## Beschreibung

Die vorliegende Erfindung bezieht sich auf ein Verfahren zur Qualitätskontrolle von Materialschichten. Derartige Verfahren werden insbesondere bei der Qualitätskontrolle und Qualitätssicherung von massenproduzierbaren Artikeln eingesetzt.

Nach der WO 98/18135 erfolgt die Überprüfung der Qualität einer Beschichtung dadurch, daß auf die Beschichtung Licht gestrahlt wird und das transmittierte Licht erfaßt wird. Aus der Transmission bzw. der Absorption des Lichtes beim Durchgang durch die Beschichtung wird nun auf lokale oder globale Fehlstellen in der Beschichtung geschlossen.

Die US 4 302 108 offenbart ein Verfahren, bei dem eine Beschichtung ebenfalls mit einem Lichtstrahl abgetastet wird. Entscheidend ist hierbei, daß der Aufstrahlwinkel auf die Beschichtung so gewählt wird, daß zumindest ein Teil des Strahles reflektiert wird. Die Intensität des reflektierten Strahles wird dann erfaßt, um Oberflächenanomalien der Struktur zu ermitteln. Mit diesem Verfahren, das im wesentlichen auf einen Aufstrahlwinkel abstellt, der zu einer Reflexion an der Oberfläche der Beschichtung führt, können Oberflächendefekte der Beschichtung erfaßt werden. Diese beschriebenen Verfahren beziehen sich auf planare Oberflächen.

Die EP 0 838 850 offenbart ein Verfahren, bei dem eine Substratoberfläche mit einer Lösung, die fluoreszierende Moleküle enthält, versehen wird. Die Oberfläche der Schicht wird mit elektromagnetischer strahlung bestrahlt und die Menge des von der Materialschicht ausgestrahlten Lichtes bestimmt.

Ausgehend von diesem Stand der Technik ist es Aufgabe der vorliegenden Erfindung, ein Verfahren zur Qualitätskontrolle von Materialschichten zur Verfügung zu stellen, mit dem in einfacher, schneller und kostengünstiger Weise die Qualität der Schicht bezüglich Schichtdicke und Oberflächendefekten zerstörungsfrei gemessen werden kann.

Diese Aufgabe wird durch das Verfahren nach dem Oberbegriff des Anspruchs 1 in Verbindung mit seinen kennzeichnenden Merkmalen gelöst. Weiterhin werden Einsatzbereiche des Verfahrens in den Ansprüchen 11 und 12 genannt.

Vorteilhafte Weiterbildungen des erfindungsgemäßen Verfahrens werden durch die abhängigen Ansprüche gegeben.

Erfindungsgemäß wird von einem Verfahren nach der US 4 302 108 ausgegangen, bei dem ein bestimmter Einstrahlwinkel eingehalten werden muß, um Reflexionsstrahlung zu erzeugen. Abweichend hiervon geht die vorliegende Erfindung jedoch davon aus, daß das Material der zu untersuchenden Schicht mit einem elektromagnetische Strahlung absorbierenden Stoff (Absorbens), beispielsweise einem farbgebenden oder fluoreszierenden Stoff versehen wird und das von dem Material dann reflektierte bzw. als Fluoreszenzlicht ausgestrahlte Licht gemessen wird. Dabei wird auch das Licht erfaßt, das nach Eindringen in die Schicht in tieferen Ebenen der Schicht reflektiert und/oder flouresziert wird und beispielsweise über die Oberfläche die Schicht wieder verläßt. Die vorliegende Erfindung nutzt zum einen damit aus, daß das Reflexionsvermögen abhängig ist von dem Absorptionsvermögen des jeweiligen Materials und daher der Remissionsgrad des Materials von dessen Absorptionskoeffizienten abhängig ist. Hierdurch wird es möglich, auch Schichtmaterialien zu vermessen, die beispielsweise ihrerseits im Bereich des ultravioletten oder sichtbaren Lichtes keine wesentliche eigene Absorption aufweisen. Dennoch kann durch die Durchfärbung des Materials mit einem elektromagnetische Strahlung absorbierenden Stoff eine Absorption erzeugt werden und so der Remissionsgrad unabhängig vom Einstrahlwinkel erhöht werden.

Als elektromagnetische Strahlung absorbierende Stoffe kommen farbgebende Stoffe, z.B. Farbmittel wie Farbstoffe oder Pigmente, oder auch elektromagnetische Strahlung absorbierende Stoffe wie UV-Absorber oder Fluorophore in Frage.

Im Falle des Einsatzes eines Fluorophors wird nicht die durch Streuung von der Oberfläche ausgestrahlte Strahlung sondern das über die Oberfläche abgestrahlte Fluoreszenzlicht der Schicht bestimmt. Beide Verfahren, die Bestimmung des zurückgestreuten Anteils bzw. des Fluoreszenzlichtes, sind gleichermaßen für das vorliegende Verfahren geeignet.

Durch das erfindungsgemäße Verfahren ist folglich eine allgemein einsetzbare schnelle und kostengünstige On-line-Qualitätskontrolle, beispielsweise für massenproduzierbare Oberflächen möglich. Dieses Verfahren ist zerstörungsfrei und berührungslos und kann zur Ermittlung von Schichtdicken oder auch Oberflächendefekten bzw. -ungleichmäßigkeiten eingesetzt werden. Damit können folglich Füllmengen, Schichtdickenverteilungen, Defekte wie Fehlstellen, Häufung oder Heterogenitäten in beliebigen Materialien erfaßt werden. Besonders vorteilhaft eignet sich das Verfahren zur Qualitätskontrolle und Qualitätssicherung von Kunststoffmembranen, Polymermembranen, insbesondere ionenselektiven Membranen oder Hydrogelen oder dgl.

Derartige Kunststoffmembranen werden beispielsweise bei ionenselektiven Elektroden für Biosensoren eingesetzt.

Mit dem erfindungsgemäßen Verfahren können nicht nur Membranen sondern auch Hydrogele untersucht werden. Soll dabei das für die densitometrische Messung erforderliche Farbmittel nicht aus der Membran gelöst werden, so muß er an Partikel gebunden sein. Diese Partikel wiederum werden von dem Hydrogel eingeschlossen. Als Partikel eignen sich hier insbesondere Latexpartikel.

Die Schicht kann vorteilhafterweise punktweise abgetastet werden, wobei die Abtastung in einer bestimmten Richtung erfolgen kann. Dadurch ist es beispielsweise möglich, eine lineare Anordnung von ionenselektiven Elektroden bezüglich ihrer Membranschichtdicken nacheinander zu vermessen. Insbesondere ist die Eingliederung des Verfahrens zur Qualitätskontrolle nach der vorliegenden Erfindung in einen sequentiellen Produktionsablauf möglich.

Da der Remissionsgrad bzw. die Fluoreszenz eines Materials von dessen Absorptionskoeffizienten abhängt, ist der Remissionsgrad bzw. die Fluoreszenz auch an die Wellenlänge des einfallenden Lichtes gebunden. Vorteilhaft ist es daher, wenn die auf die Schicht gestrahlte elektromagnetische Strahlung eine Wellenlänge aufweist, die einer Absorptionsbande des Absorbens enspricht. Dabei ist jedoch zu beachten, daß über die Wahl der eingestrahlten Wellenlänge oder die Wahl der Farbmittelkonzentration in der Membran in einem Bereich gemessen wird, bei dem sich eine klar auswertbare Beziehung, idealerweise eine lineare Beziehung, zwischen der Menge an reflektiertem Licht bzw. Fluoreszenzlicht und der Schichtdicke der Membran ergibt.

Besonders geeignet für das vorliegende Verfahren sind die Farbmittel Curcumin (1,7-Bis(4-hydroxy-3-methoxyphenyl)1,6-heptadien-3,5-dion), Scharlach Rot (1(-2-Methyl-4-o-tolylazo-phenylazo)-(2)naphtol), bzw. Sicodop Blau (Pigmentpaste, Handelsbezeichnung eines unloslichen Farbmittels der Firma BASF, chemische Struktur nicht veröffentlicht). Curcumin ist ein Fluorescenzfarbmittel, der den weiteren Vorteil hat, als Lebensmittelfarbstoff nicht gesundheitsschädlich zu sein.

Im folgenden werden einige Beispiele des erfindungsgemaßen Verfahrens gegeben.

Es zeigen
- Fig. 1: eine Meßanordnung für ein erfindungsgemäßes Verfahren;
- Fig. 2: das erfindungsgemäße Verfahren;
- Fig. 3: den Zusammenhang zwischen Farbmittelkonzentration und Signalintensität;
- Fig. 4: den Zusammenhang zwischen Membranschichtdicke und Intensität des Signales für den Farbstoff Scharlach Rot;
- Fig. 5: den Zusammenhang zwischen Membranschichtdicke und Intensität des Signales für den Fluoreszenzfarbstoff Curcumin sowie
- Fig. 6: Signale aus der Messung zweier ionenselektiver Elektroden.

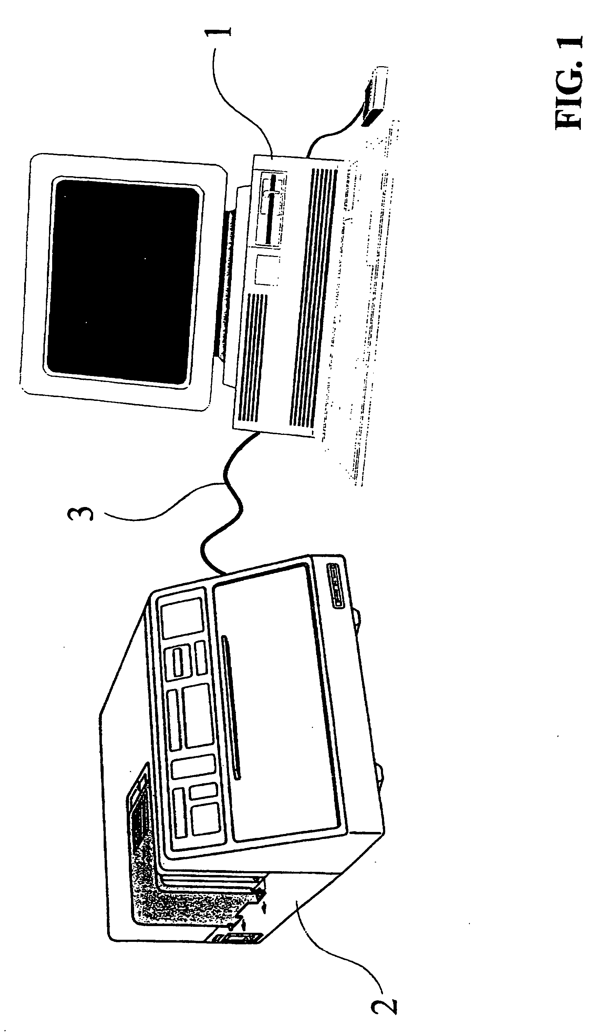

Figur 1 zeigt eine Anordnung zur Messung nach dem erfindungsgemäßen Verfahren. Diese Anordnung weist einen Computer 1 und einen TLC-Scanner 2 (Dünnschichtchromotographie-Scanner) als Densitometer auf. Der TLC-Scanner 2 und der Computer 1 sind über ein Verbindungskabel 3 verbunden, über das der Computer das Densitometer 2 ansteuert und die Meßkurven aufzeichnet.

Zur Messung wird das zu vermessende Objekt auf dem Plattentisch des Scanners 2 positioniert, mit Magnetstreifen fixiert und in das Densitometer 2 eingelegt. Für Messungen im Bereich des sichtbaren Lichtes wird eine Wolframlampe als Lichtquelle verwendet, während zur Anregung von Fluoreszenz eine Quecksilberlampe gewählt wird. In letzterem Falle muß zusätzlich ein entsprechendes Kantenfilter vor den Meß-Photomultiplier des Densitometers 2 positioniert werden, um Anregungslicht und Fluoreszenzlicht spektral zu trennen.

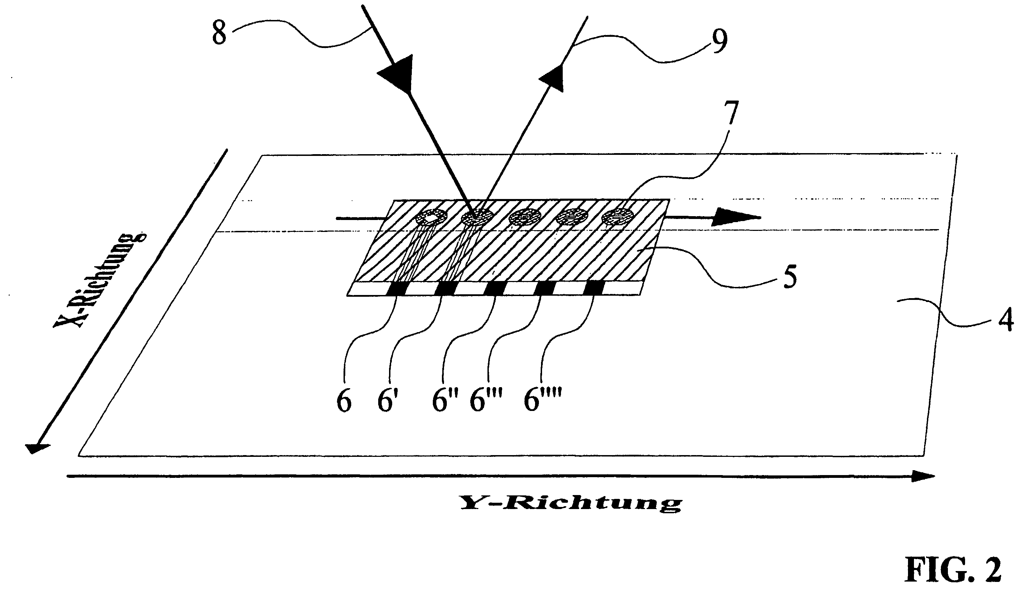

Nach Eingabe der entsprechenden Meßparameter in den Computer 1 wird mit der Messung begonnen. Der Lichtstrahl fährt in eine Richtung über die Probe, wie in Fig. 2 dargestellt. Die Intensität des reflektierten Lichtes wird gemessen und aufgrund ihrer Proportionalität zur Absorption als Absorption dargestellt. Alternativ erfolgt eine Messung des Fluoreszenzlichtes.

Figur 2 zeigt die Vermessung einer Abfolge von ionenselektiven Elektroden.

Zur Herstellung derartiger ionenselektiver Elektroden werden Kunststoffmembranen mit eingelagerten analytspezifischen Ionophoren verwendet. Bei Sensoren, die in der Doppelmatrixmembran-Technologie gefertigt werden, wird beispielsweise eine PVC-Membran in flüssiger Form auf ein poröses Material gebracht. Ein Teil der Membran dringt in die Matrix ein, der Rest verteilt sich gleichmäßig über der porösen Schicht in einer Kavität. Dabei wird die Elektrode gegen das Meßmedium abgedichtet. Um Undichtigkeiten zu minimieren ist nach derzeitigem Kenntnisstand eine mindestens viermalige Befüllung der Elektrode mit PVC-Cocktail erforderlich. Die Einhaltung der Qualitätsanforderung an Gleichmäßigkeit der Befüllung und Dichtigkeit wird dann mit dem erfindungsgemäßen densitometrischen Verfahren geprüft. Dazu wird die PVC-Membran in flüssigem Zustand mit einem entsprechenden elektromagnetische Strahlung absorbierenden, beispielsweise farbgebenden oder fluoreszierenden Stoff versetzt, bevor sie vergossen wird. Als absorbierende Stoffe kommen die oben genannten Pigmente oder Farbmittel in Frage. Fernerhin können Fluorophore eingesetzt werden.

Figur 2 zeigt nun eine Abfolge derartiger in Massenproduktion hergestellter ionenselektiver Elektroden 6, 6', 6" , 6''', 6'''' , die auf einem Meßtisch 4 angeordnet sind. Die Elektroden werden als einzelne Sensorstreifen in einem Sensorarray 5 hergestellt, und sind nebeneinander angeordnet. Die Elektroden 6 bis 6'''' weisen jeweils einen Meßkopf 7 auf. Dieser Meßkopf 7 enthält die zu vermessende ionenselektive Membran.

Auf den Meßtisch wird nun Anregungslicht 8 gestrahlt und das von den Meßköpfen 7 reflektierte Licht 9 wird anschließend vermessen und als Absorption dargestellt. Über die Menge an reflektiertem Licht wird damit die Schichtdicke und auch die Homogenität der ionselektiven Membran in den Meßköpfen 7 abgetastet.

Der Meßtisch 4 wird in Pfeilrichtung verschoben, so daß zum einen die einzelnen Sensorstreifen in der Abfolge 6"", 6''' , 6'', 6' und zuletzt Sensorstreifen 6 vermessen werden und zum anderen in Pfeilrichtung auch das Profil der ionenselektiven Membran jedes einzelnen Meßkopfes 7 ermittelt wird.

Um den Meßbereich des Densitometers einzustellen, wird vor der Messung ein Nullabgleich mit einer ungefärbten Matrix durchgeführt.

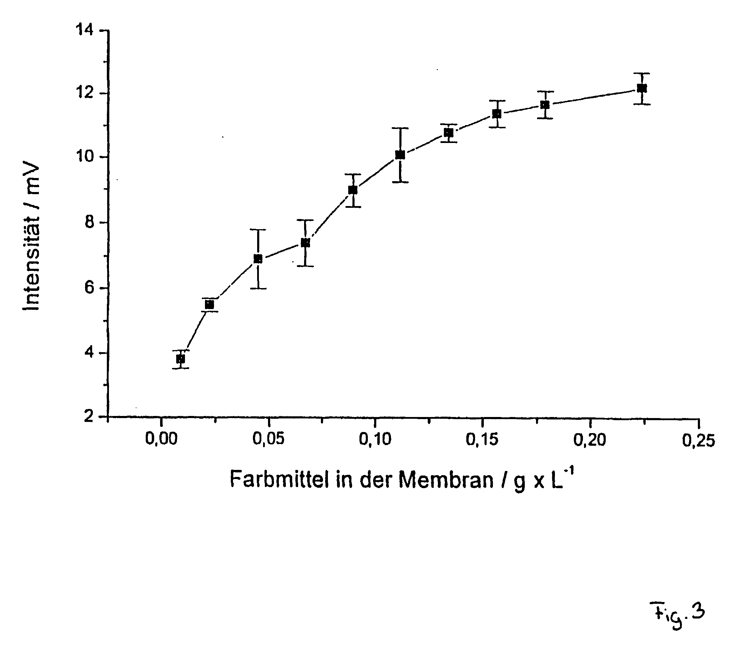

Figur 3 zeigt eine Kalibrierkurve für Elektrodenmembranen der beschriebenen Art mit verschiedenen Konzentrationen des Farbstoffes Scharlach Rot. Bis zu einer Konzentration von ca. 0,12 g/l Scharlach Rot in der Membran erkennt man eine extra lineare Abhängigkeit zwischen Intensität und Farbmittelmenge in der Membran. Um im Rahmen der Qualitätsicherung gut zwischen verschiedenen Membrandicken unterscheiden zu können, sollte die erzielte Farbmittelmenge bei ausreichender Befüllung der Membrankavität des Meßkopfes 7 mindestens um den Faktor 2 unter dieser Konzentration liegen. Bei höherer Konzentration verläßt man den linearen Meßbereich und die Auflösung der Messung wird schlechter, wenn auch nicht unmöglich.

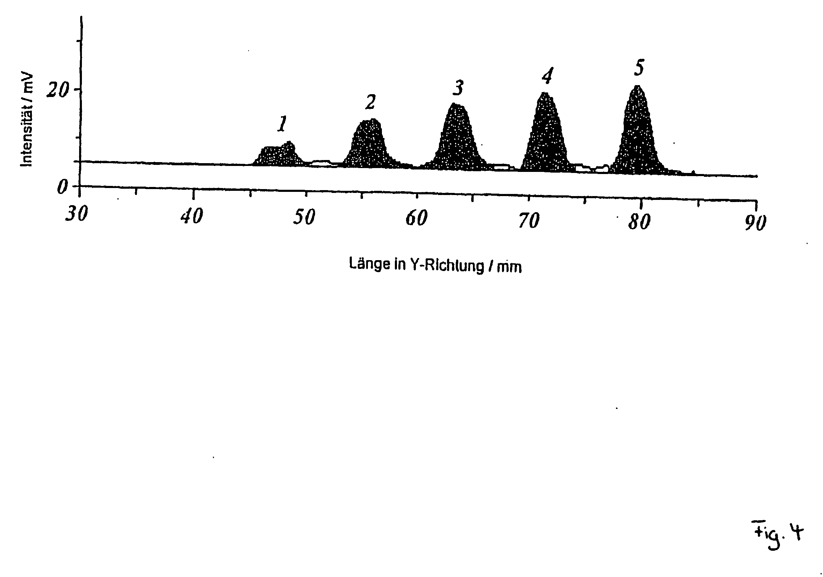

Figur 4 zeigt eine Meßkurve, wie sie nach einem Verfahren wie es in der Fig. 2 dargestellt ist, an fünf aufeinanderfolgenden Meßköpfen 7 ermittelt wurde. Die einzelnen Meßköpfe wurden dabei einmal (Bezugszeichen 1), zweimal (Bezugszeichen 2), dreimal, viermal bzw. fünfmal (Bezugszeichen 3, 4 bzw. 5) mit einer ionenselektiven Membran befüllt, die 0,0224 g/l Scharlach Rot enthielt. Aufgrund der festgelegten Kavitätenabmessungen für die ionenselektive Membran ergaben sich dadurch Meßköpfe mit fünf verschiedenen Schichtdicken der ionenselektiven Membran.

Wie unmittelbar zu erkennen ist, resultiert die Schichtdicke bei derselben Farbmittelkonzentration in der ionenselektiven Membran in fünf verschiedenen Signalintensitäten, wobei die Signalintensität unmittelbar mit der Schichtdicke korreliert. Damit ist der Nachweis erbracht, daß das erfindungsgemäße Verfahren dazu eingesetzt werden kann, um Schichtdicken in ionenselektiven Membranen zu bestimmen.

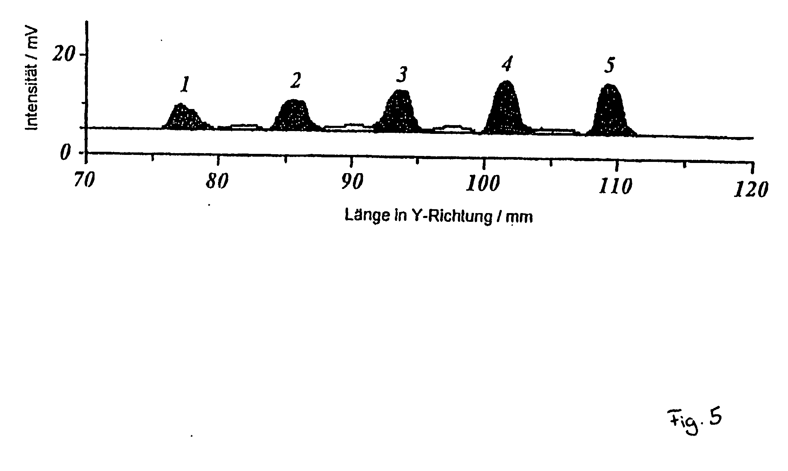

Figur 5 zeigt eine weitere Meßkurve, wie sie nach einem Verfahren wie es in Fig. 2 dargestellt ist, an fünf aufeinanderfolgenden Meßköpfen 7 ermittelt wurde. Die einzelnen Meßköpfe wurden dabei ein- bis fünfmal (Bezugszeichen 1 bis 5) mit einer ionenselektiven Membran befüllt, die 0,0224 g/l Curcumin enthielt. Damit wurden fünf Meßköpfe hergestellt, deren Membranschichtdicken zwischen dem Einfachen und dem Fünffachen der ursprünglichen Schichtdicke bei Meßkopf 1 variieren. Wie unmittelbar zu erkennen ist, resultiert auch hier die Schichtdicke bei derselben Farbmittelkonzentration in der ionenselektiven Membran in fünf verschiedenen Signalintensitäten für die gemessene Fluoreszenzstrahlung, wobei die Signalintensität für die Meßköpfe 1 bis 4 mit der Schichtdicke korreliert. Die Signalintentsität zwischen Meßkopf 4 und Meßkopf 5 unterscheidet sich nicht mehr wesentlich, da hier der Sättigungsbereich des Signals aufgrund der großen Schichtdicke erreicht wurde. Der Farbstoff Curcumin läßt sich folglich in der gewählten Konzentration von 0,0224 g/l dazu einsetzen, um die Schichtdicken der Meßköpfe 1 bis 4 voneinander zu unterscheiden. Um auch größere Schichtdicken, wie beispielsweise diejenigen des Meßkopfes 5 entsprechend zu erfassen, wäre eine Verringerung der Konzentration des Fluoreszenzfarbstoffes Curcumin in der Membranlösung erforderlich. Damit ist der Nachweis erbracht, daß das erfindungsgemäße Verfahren auch über die Erfassung von Fluoreszenzlicht dazu eingesetzt werden kann, um Schichtdicken in ionenselektiven Membranen zu bestimmen.

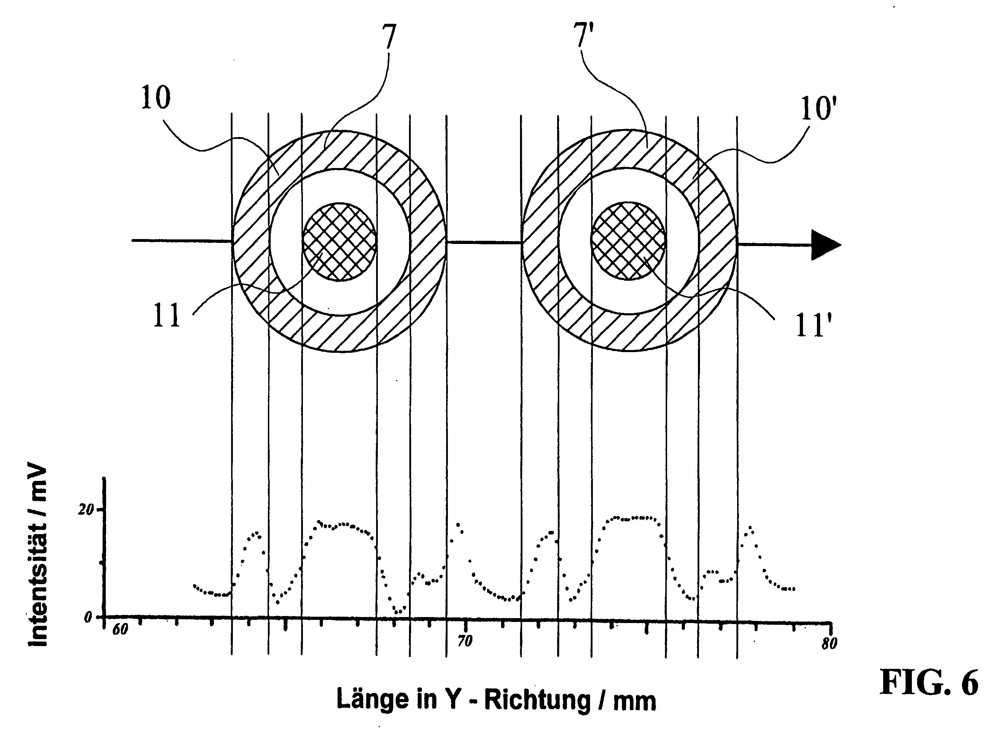

Figur 6 zeigt die Abfolge zweier Meßköpfe 7, 7', die in Pfeilrichtung mit dem in Fig. 2 dargestellten Meßtisch 4 unter einem Anregungslichtstrahl durchgeschoben wurden. Die zugehörigen Signale des reflektierten Lichtes sind im unteren Teil der Fig. 6 dargestellt.

Die Meßköpfe 7, 7' weisen je eine Silberelektrode 10 bzw. 10' auf, die eine Kavität ringförmig umgibt. In diese Kavität ist eine Membranfüllung aus einem ionenselektiven Membranmaterial 11, 11' eingefüllt. Das ionenselektive Membranmaterial 11, 11' ist auf der hier nicht dargestellten Rückseite des Meßkopfes mit der Silberelektrode 10, 10' zur Ableitung der Signale kontaktiert.

Die Membranfüllung 11 bzw. 11' wurde in noch flüssigem Zustand vor dem Einfüllen in die Kavität mit Scharlach Rot in gleicher Farbmittelkonzentration für beide Meßköpfe 7, 7' gefärbt.

Wie in Fig. 6 deutlich wird, absorbieren und reflektieren nicht nur die mit Scharlach Rot eingefärbten farbigen Flächen der Membranfüllungen 11, 11' sondern auch die Silberelektroden 10, 10'. Dies muß bei der anschließenden numerischen Auswertung der gemessenen Signale berücksichtigt werden.

Dennoch ist deutlich zu erkennen, daß die Membranfüllungen 11, 11' ein Signal erzeugen, das ein Plateau aufweist und der Farbmittelkonzentration bzw. der Schichtdicke der Membranfüllungen 11, 11' entspricht. Weiterhin erkennt man, daß die Plateaus der Signale der Membranfüllungen 11, 11' einen Rücken aufweisen, in dem die Intensität leicht geringer ist als an den Rändern des Plateaus. Das kann darauf zurückgeführt werden, daß sich der Membrancocktail nach der Befüllung am Rand der Kavität emporzieht. Dadurch entsteht in der Mitte der Membran eine Fläche mit weniger Membrancocktail, also verringerter Schichtdicke der Membranfüllungen 11, 11'. Damit ist auch nachgewiesen, daß sich das erfindungsgemäße Verfahren dazu eignet, Schichtdickenprofile und Defekte innerhalb der Membran als auch an der Membranoberfläche nachzuweisen.

## Patentansprüche

1. Verfahren zur Qualitätskontrolle von Materialschichten (7) mit einer Oberfläche, wobei die Oberfläche der Schicht mit elektromagnetischer Strahlung (8) bestrahlt wird und die Menge des von der Materialschicht ausgestrahlten Lichtes (9), beispielsweise Reflexionsstrahlung und/oder Fluoreszenzstrahlung, bestimmt wird, wobei das Material der Schicht mit einem die Strahlung absorbierenden Stoff versehen wird,
**dadurch gekennzeichnet,daß**
das Material der Schicht vor Erzeugung der Schicht mit dem die Strahlung absorbierenden Stoff gemischt wird.

2. Verfahren nach einem der vorhergehenden Ansprüche, **dadurch gekennzeichnet, daß** das Material der Schicht mit einem farbgebenden Stoff, z.B. einem Farbmittel oder einem Pigment und/oder mit einem UV-Absorber und/oder mit einem Fluorophor als die Strahlung absorbierendem Stoff versehen wird.

3. Verfahren nach einem der vorhergehenden Ansprüche, **dadurch gekennzeichnet, daß** die Schicht mit der elektromagnetischen Strahlung abgetastet wird.

4. Verfahren nach dem vorhergehenden Anspruch, **dadurch gekennzeichnet, daß** die Schicht punktweise abgetastet wird.

5. Verfahren nach einem der beiden vorhergehenden Ansprüche, **dadurch gekennzeichnet, daß** die Schicht mit der elektromagnetischen Strahlung linear abgetastet wird.

6. Verfahren nach einem der vorhergehenden Ansprüche, **dadurch gekennzeichnet, daß** die auf die Oberfläche der Schicht aufgestrahlte elektromagnetische Strahlung eine Wellenlänge aufweist, die einer Absorptionsbande des die Strahlung absorbierenden Stoffes entspricht.

7. Verfahren nach einem der vorhergehenden Ansprüche, **dadurch gekennzeichnet, daß** als elektromagnetische Strahlung ultraviolette Strahlung und/oder sichtbares Licht auf die Schicht aufgestrahlt wird.

8. Verfahren nach einem der vorhergehenden Ansprüche, **dadurch gekennzeichnet, daß** der die Strahlung absorbierende Stoff an Partikel gebunden dem Material der Schicht zugegeben wird.

9. Verfahren nach einem der vorhergehenden Ansprüche, **dadurch gekennzeichnet, daß** der die Strahlung absorbierende Stoff an Latexpartikel gebunden dem Material der Schicht zugegeben wird.

10. Verfahren nach einem der vorhergehenden Ansprüche, **dadurch gekennzeichnet, daß** als die Strahlung absorbierende Stoffe Curcumin, Scharlach Rot und/oder Sicodop Blau dem Material der Schicht zugegeben werden.

11. Verwendung eines Verfahrens nach einem der vorhergehenden Ansprüche zur Bestimmung von Schichtdicken bzw. Füllmengen, Schichtdickenverteilungen, Defekten wie Fehlstellen, Häufungen oder Heterogenitäten in Kunststoffmembranen, Polymermembranen, ionenselektiven Membranen, Hydrogelen oder dergleichen.

12. Verwendung nach dem vorhergehenden Anspruch zur Qualitätskontrolle von ionenselektiven Membranen, beispielsweise in Biosensoren.

## Claims

1. Method for the quality controlling of material layers (7) with a surface, whereby the surface of the layer is irradiated with electromagnetic rays (8), and whereby the amount of light (9) emitted by the material layer, such as for example reflection rays and/or fluorescent rays, is measured, whereby the material of the layer is equipped with a ray-absorbing material, **characterised in that** the material of the layer is mixed with the said ray-absorbing material prior to the manufacture of said layer.

2. Method according to the proceeding Claim, **characterised in that** the material of the layer is equipped with a colouring material such as for example a dye or a pigment and/or with a UV absorber and or with a fluorophor as the ray-absorbing material.

3. Method according to one of the preceding Claims, **characterised in that** the layer is scanned by the electromagnetic rays.

4. Method according to the preceding Claim, **characterised in that** the layer is scanned point by point.

5. Method according to one of the two preceding Claims, **characterised in that** the layer is scanned in a linear fashion by the electromagnetic rays.

6. Method according to one of the preceding Claims, **characterised in that** the electromagnetic rays applied to the surface of the layer are of a wavelength that equals the absorption range of the material absorbing the rays.

7. Method according to one of the preceding Claims, **characterised in that** the electromagnetic rays consist of ultraviolet rays and/or visible light, whereby the same is applied to the layer.

8. Method according to one of the preceding Claims, **characterised in that** the material absorbing the rays is added to the material of the layer in a particle-bonded fashion.

9. Method according to one of the preceding Claims, **characterised in that** the material absorbing the rays is added to the material of the layer in a latex-bonded fashion.

10. Method according to one of the preceding Claims, **characterised in that** the material absorbing the rays, i.e. curcumin, scarlet red, and/or sicodop blue is added to the material of the layer.

11. Utilisation of a method according to one of the preceding Claims for the measuring of layer thicknesses, i.e. filling quantities, layer thickness distributions, defects such as faults, accumulations or heterogeneities in plastic membranes, polymer membranes, ion selective membranes, hydrogels or suchlike.

12. Utilisation according to the preceding Claim for the quality controlling of ion selective membranes such as for example in bio-sensors.

## Revendications

1. Procédé pour le contrôle de la qualité de couches de matériau (7) avec une surface, la surface de la couche étant exposée au rayonnement électromagnétique (8) et la quantité de lumière (9) émise par la couche de matériau, par exemple le rayonnement réfléchi et / ou le rayonnement fluorescent, étant déterminée, le matériau de la couche étant pourvu d'une matière absorbant le rayonnement, **caractérisé en ce que** le matériau de la couche est mélangé avec la matière absorbant le rayonnement avant la fabrication de la couche.

2. Procédé selon la revendication précédente, **caractérisé en ce que** le matériau de la couche est pourvu d'une matière chromophore, par exemple un colorant ou un pigment et / ou un absorbeur d'U.V. et / ou un fluorogène, comme matière absorbant le rayonnement.

3. Procédé selon l'une des revendications précédentes, **caractérisé en ce que** la couche est balayée par le rayonnement électromagnétique.

4. Procédé selon la revendication précédente, **caractérisé en ce que** la couche est balayée par points.

5. Procédé selon l'une des deux revendications précédentes, **caractérisé en ce que** la couche est balayée de manière linéaire par le rayonnement électromagnétique.

6. Procédé selon l'une des revendications précédentes, **caractérisé en ce que** le rayonnement électromagnétique dirigé sur la surface de la couche présente une longueur d'onde qui correspond à une bande d'absorption de la matière absorbant le rayonnement.

7. Procédé selon l'une des revendications précédentes, **caractérisé en ce que**, comme rayonnement électromagnétique, un rayonnement ultraviolet et / ou une lumière visible est dirigé(e) sur la couche.

8. Procédé selon l'une des revendications précédentes, **caractérisé en ce que** la matière absorbant le rayonnement liée à des particules est ajoutée au matériau de la couche.

9. Procédé selon l'une des revendications précédentes, **caractérisé en ce que** la matière absorbant le rayonnement liée à des particules de latex est ajoutée au matériau de la couche.

10. Procédé selon l'une des revendications précédentes, **caractérisé en ce que** la matière absorbant le rayonnement, jaune de curcuma, rouge écarlate et / ou bleu Sicodop, est ajoutée au matériau de la couche.

11. Utilisation d'un procédé selon l'une des revendications précédentes pour déterminer l'épaisseur de couches et / ou les quantités de remplissage, les répartitions des épaisseurs de couches, les défauts comme les marques, les accumulations ou les hétérogénéités dans des membranes en matière plastique, des membranes polymériques, des membranes sélectives d'ions, des hydrogels ou similaires.

12. Utilisation selon la revendication précédente pour le contrôle de la qualité de membranes sélectives d'ions, par exemple dans des capteurs biologiques.
